# EUROPEAN PATENT SPECIFICATION

(11) **EP 1 758 187 B1**
(45) Date of publication and mention of the grant of the patent: **27.08.2008**
(21) Application number: 05107775.8
(22) Date of filing: 24.08.2005
(51) Int. Cl.: H01M 8/04, G01N 29/024

(54) **Fuel-concentration detecting and controlling device for fuel cell**
Vorrichtung zur Bestimmung und Kontrolle der Brennstoffkonzentration in einer Brennstoffzelle
Dispositif pour la détection et le contrôle de la concentration d'un combustible dans une pile à combustible

(43) Date of publication of application: 28.02.2007
(73) Proprietor: Atomic Energy Council - Institute of Nuclear Energy Research, Lungtan, Taoyuan, Taiwan (TW)
(72) Inventor: Perng, Kang-Nang, 367, Sanyi Township, Miaoli County (TW); Liu, Ching-Shin, 325, Longtan Township, Taoyuan County (TW); Lin, Kin-Fu, 106, Taipei (TW); Chen, Charn-Ying, 330, Taoyuan City, Taoyuan County (TW); Hwang, Kang-Lin, 367, Sanyi Township, Miaoli County (TW); Lee, Ying-Sheng, 231, Sindian City, Taipei County (TW)
(74) Representative: Beck, Michael Rudolf

(56) References cited:
- US-A1- 2003 121 315
- PATENT ABSTRACTS OF JAPAN vol. 2003, no. 12, 5 December 2003 (2003-12-05) & JP 2004 095376 A (YAMAHA MOTOR CO LTD), 25 March 2004 (2004-03-25)

## Description

### FIELD OF THE INVENTION

The present invention relates to a detecting and controlling device; more particularly, relates to emitting an intermittent pulse wave by a transducer element to pass through a fuel pool and be reflected back to be received by a comparator for a time-deviation comparison with a base signal representing a standard fuel concentration or a default acoustic velocity, where the time deviation obtained can be turned into a control signal to remain a fuel concentration of the fuel pool with a valve or a pump.

### DESCRIPTION OF THE RELATED ART

Following the development of the modern science, the consumption of the natural resources is increasing. To solve the energy problem, a fuel cell with high effectiveness and low pollutant is disclosed as a substitute to the internal combustion engine. In 1957, Willard T. Grubb proclaimed a Proton Exchange Membrane Fuel Cell (PEMFC). But, the PEMFC uses hydrogen as a fuel which is either stored in a gas cylinder with high pressure and so is of high danger; or, it may use the Hydrogen Storage Alloy to provide hydrogen which is too heavy and is inconvenient for supplying.

To solve the above problem, a Direct Methanol Fuel Cell (DMFC) using a methanol solution as a fuel is provided with easy supplying and high safety. Although the DMFC comprises a small volume and a steady and long-term power supply, its power-generating efficiency is much lower than that of the PEMFC, which reaches only one-fifth to one-third of that of the PEMFC. In addition, the methanol crossover of the methanol solution directly affects the DMFC's efficiency. The concentration and the temperature of the methanol solution also directly affect the output efficiency of the electrical energy. It means that, under different temperatures or different concentrations of the methanol solution, deviations of the output current density will happen. Furthermore, the method for sensing the concentration of the methanol solution in the DMFC is based on electrochemistry. After a certain period of time, carbon monoxide will be produced to poison the platinum electrode so that the sensor has to be replaced regularly resulting in cost increase. Moreover, the sensor for electrochemistry comprises a big volume, which is not suitable to the minimization of the DMFC power system's volume.

A fuel-concentration detecting and controlling device for a fuel cell according to the preamble portion of claim 1 and according to the preamble portion of claim 9 is known from US 2003/0121315 A1. More specifically, US 2003/0121315 A1 discloses a sensor utilizing ultrasound sensing techniques to compare an ultrasound measurement of a sample fuel to an ultrasound measurement of a reference liquid, such as water, and outputs a signal representative of the difference in sound velocity between the sample and reference liquid.

Another fuel-concentration detecting and controlling device for a fuel cell is known from JP 2004095376 A.

### SUMMARY OF THE INVENTION

Therefore, the main purpose of the present invention is to provide a detecting and controlling device of low cost for the fuel concentration of a fuel cell which is able to accurately compensate variations in temperature.

To achieve the above purpose, the present invention provides a fuel-concentration detecting and controlling device for a fuel cell comprising the features of claims 1 or, alternatively, the features of claim 9.

Advantageous embodiments are laid down in the dependent claims.

A time deviation is obtained by a comparator through a comparison of different arriving times of an ultrasonic wave passing through the standard fuel pool and the fuel-mix pool with different fuel concentrations. A control signal based on the time deviation is sent to drive the controlling device by the server to add a fuel (such as a methanol solution) from the pure fuel pool into the fuel-mix pool for balancing the fuel concentrations of the standard fuel pool and the fuel-mix pool between 3.5% and 4%. The first and the second transducer elements are sensors of ultrasonic element provided with tiny electricity for reducing cost and minimizing the concentration variation of the fuel-mix pool; and, the ultrasonic element is made through a micro-machine production for a volume minimization.

### BRIEF DESCRIPTION OF THE DRAWINGS

The present invention will be better understood from the following detailed descriptions of the preferred embodiments according to the present invention, taken in conjunction with the accompanying drawings, in which
- FIG.1: is a view showing a first preferred embodiment according to the present invention; and
- FIG.2: is a view showing a second preferred embodiment according to the present invention.

### DESCRIPTION OF THE PREFERRED EMBODIMENTS

The following descriptions of the preferred embodiments are provided to understand the features and the structures of the present invention.

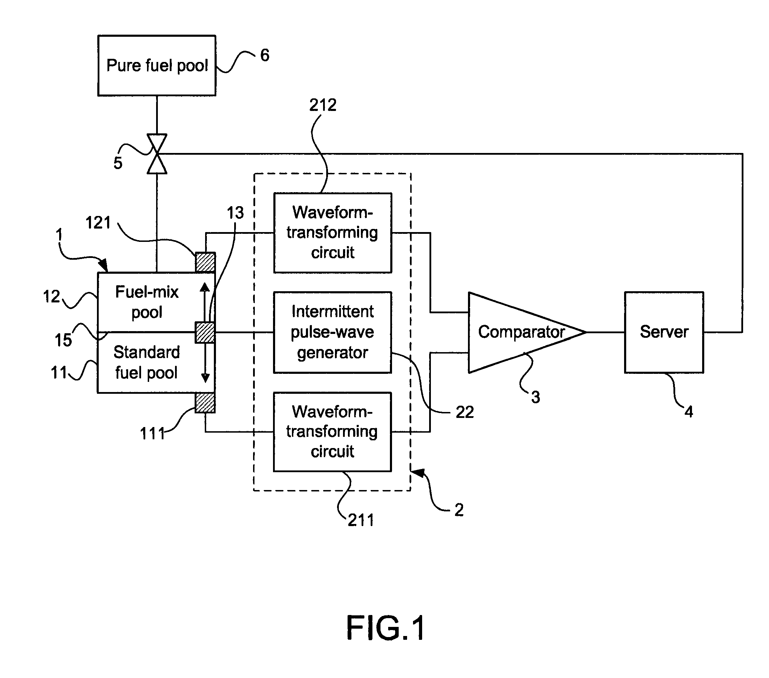

FIG.1 shows a first embodiment of a fuel- concentration detecting and controlling device for a fuel cell, comprising a comparative fuel pool 1, an ultrasonic element 2, a comparator 3, a server 4, a controlling device 5 and a pure fuel pool 6. Therein, the comparative fuel pool 1 comprises a standard fuel pool 11 and a fuel-mix pool 12 separated by a barrier 15. The standard fuel pool 11 is filled with a fuel having a standard mixture rate. The barrier 15 is made of a material having high thermal conductivity and no chemical reaction with the fuel for balancing temperatures of the two fuel pools 11, 12. The ultrasonic element 2 comprises a first waveform-transforming circuit 211, a second waveform-transforming circuit 212 and an intermittent-pulse-wave generator 22 generating intermittent ultrasonic waves. The standard fuel pool 11 and the fuel-mix pool 12 are connected with the first waveform-transforming circuit 211 and the second waveform-transforming circuit 212 respectively. A first transducer element 111 is located at a place where the first waveform-transforming circuit 211 is connected with the standard fuel pool 11. A second transducer element 121 is located at a place where the second waveform-transforming circuit 212 is connected with the fuel-mix pool 12. A third transducer element 13 is located between the standard fuel pool 11 and the fuel-mix pool 12 and is connected to the intermittent-pulse-wave generator 22. The first and the second transducer elements 111,121 have corresponding equidistances to the third transducer element 13. An end of the first transducer element 111 and an end of the second transducer element 121 are connected to an end of the comparator 3. The comparator 3 can be an OP (operational power) amplifier, a transistor or a FLIP-FLOP circuit. Another end of the comparator 3 is connected to an end of the server 4. An amplifier (not shown in the figure) and an A/D (analog/digital) transformer (not shown in the figure) can be further deposed between the comparator 3 and the server 4. Another end of the server 4 is connected to a control part of the controlling device 5. The controlling device 5 can be a uni-directional or bi-directional controlling valve or pump; and the upper and lower ways of the controlling device 5 are connected to the pure fuel pool 6 and the fuel-mix pool 12 respectively.

In the first embodiment, an intermittent-pulse-wave signal is provided by the intermittent-pulse-wave generator 22 to excite the third transducer element 13 by transforming an electrical energy into a mechanical energy to reach the first and the second waveform-transforming circuits 211, 212 through the standard fuel pool 11 and the fuel-mix pool 12 respectively in a form of a longitudinal wave, namely an ultrasonic wave. The mechanical energy is then transformed back to the electrical energy to be transmitted to the first and the second waveform-transforming circuits 211, 212 for transforming sine wave into square wave to be transferred to the comparator 5 for a comparison. When the fuel-mix pool 12 comprises the same fuel concentration as the fuel concentration of the standard fuel pool 11, the ultrasonic wave emitted by the third transducer element 13 reach the first and the second transducer elements 111, 121 at the same time without time deviation. When the fuel-mix pool 12 comprises a fuel concentration different from the fuel thickness of the standard fuel pool 11, the ultrasonic wave emitted by the third transducer element 13 reach the first and the second transducer elements 111, 121 at different times with a time deviation. The value of the time deviation is obtained by the comparator 3; and the comparator 3 outputs a control signal to the server 4 accordingly to drive the controlling device 5 for adding fuel from the pure fuel pool 6 to the fuel-mix pool 12 so that the fuel concentration of the standard fuel pool 11 and the fuel concentration of the fuel-mix pool 12 remain balanced.

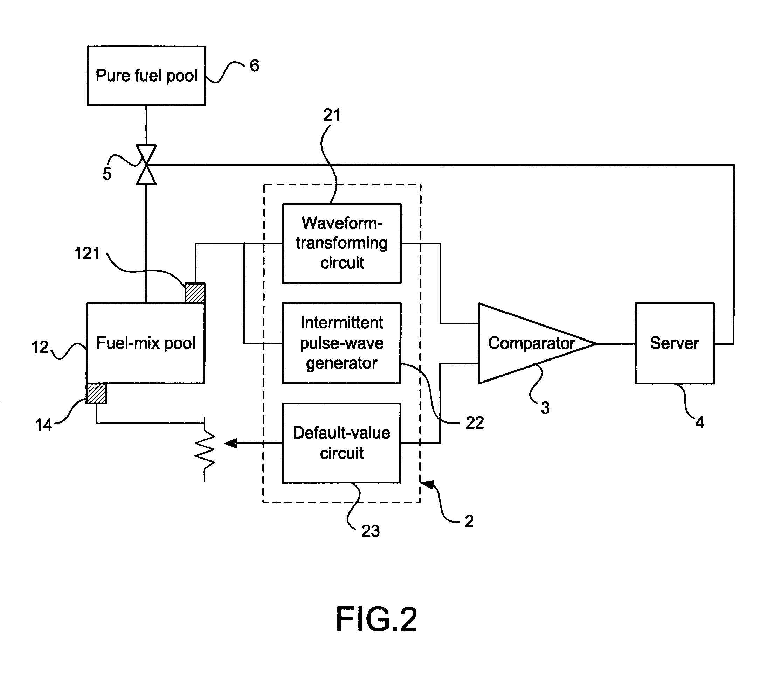

FIG.2 shows a second embodiment replacing the second waveform-transforming circuit 212 of the first preferred embodiment shown in FIG.1 with a waveform-transforming circuit 21; and the standard fuel pool 11, the first transducer element 111, the third transducer element 13 and the first waveform-transforming circuit 211 of the first preferred embodiment shown in FIG.1 with an electronic circuit 23 setup with a default value. A thermostat is deposed at the fuel-mix pool 12 for thermo-compensation. The second embodiment comprises a fuel-mix pool 12, an ultrasonic element 2, a thermostat 14, a comparator 3, a server 4, a controlling device 5 and a pure fuel pool 6. The ultrasonic element 2 comprises the waveform-transforming circuit 21, an intermittent-pulse-wave generator 22, and the electronic circuit 23. The fuel-mix pool 12 is connected to the waveform-transforming circuit 21; and a transducer element 121 is deposed at a place where the waveform-transforming circuit 21 is connected with the fuel-mix pool 12. The transducer element 121 is connected to an end of the intermittent-pulse-wave generator 22; and another end of the waveform-transforming circuit 21 and an end of the electronic circuit 23 are connected to an end of the comparator 3. Another end of the comparator 3 is connected to an end of the server 4; and another end of the server 4 is connected to a control part of the controlling device 5. The upper and lower ways of the controlling device 5 are connected with the pure fuel pool 6 and the fuel-mix pool 12 respectively.

In the second embodiment, an intermittent-pulse-wave signal is provided by the intermittent-pulse-wave generator 22 to excite the transducer element 121 for transforming electrical energy into mechanical energy to pass the wave signal through the fuel-mix pool 12 in a form of a longitudinal ultrasonic wave. After the ultrasonic wave is reflected back from the wall of the fuel-mix pool 12, the ultrasonic wave is received by the transducer element 121 to be transferred to the waveform-transforming circuit 21 for transforming sine wave into square wave. The wave transformed previously and a time-base signal setup in the electronic circuit 23 for a default fuel concentration are sent together to the comparator 3 for a comparison. When the fuel concentration of the fuel-mix pool 12 is different from the default fuel concentration setup in the electronic circuit 23, the comparator 3 outputs a control signal to the server 4 to drive the controlling device 5 for adding fuel from the pure fuel pool 6 to the fuel-mix pool 12 so that the fuel concentration of the fuel-mix pool 12 remains balanced.

The present invention of a fuel-concentration detecting and controlling device for a fuel cell is based on electrochemistry. In FIG. 1 the fuel concentration of the standard fuel pool 11 is the best fuel concentration for the fuel-mix pool 12. Here a case when the fuel concentration of the fuel-mix pool 12 is lower than of the standard fuel pool 11 is taken. The ultrasonic wave reaches the first and the second transducer elements 111, 121 at different times owing to the different concentration. A comparison between the different times is done by the comparator 3 to obtain a time deviation to drive the controlling device 5 by the server 4 for adding the methanol solution with 100% concentration in the pure fuel pool 6 into the fuel-mix pool to remain the fuel concentration of the fuel-mix pool 12 being between 3.5% and 4%, the same as the fuel concentration of the standard fuel pool 11.

The first embodiment according to FIG.1 is able to solve the problem of thermo-variation and electrode contamination by using a barrier 15 between the standard fuel pool 11 and the fuel-mix pool 12 to separate the two pools and to balance the temperatures of the two pools so that the standard fuel pool 11 and the fuel-mix pool 12 are in the same environment. The second embodiment according to FIG.2 uses the electronic circuit 23 and the thermostat 14 to solve the same problem. Besides, the first and the second transducer element 111,121 of the first preferred embodiment are all sensors provided with tiny electricity for reducing cost and minimizing the concentration variation of the fuel-mix pool 12; and the sensor can be an ultrasonic element made through a micro-machine production for a volume minimization.

To sum up, the present invention provides a fuel-concentration detecting and controlling device for a fuel cell with reduced cost, minimized volume and increased sensitivity, which controls a concentration of a fuel pool by using a time deviation caused by different concentrations.

The preferred embodiments herein disclosed are not intended to unnecessarily limit the scope of the invention. Therefore, simple modifications or variations within the scope of the claims fall within the scope of the present invention.

## Claims

1. A fuel-concentration detecting and controlling device for a fuel cell, comprising:
(a) a comparative fuel pool (1) comprising a standard fuel pool (11) and a fuel-mix pool (12);
(b) an ultrasonic element (2) comprising a first waveform-transforming circuit (211), a second waveform-transforming circuit (212) and an intermittent-pulse-wave generator (22), an end of said first waveform-transforming circuit and an end of said second waveform-transforming circuit connecting respectively with an end of said standard fuel pool and an end of said fuel-mix pool ;
(c) a comparator (3), an end of said comparator connecting with another end of said first waveform-transforming circuit and another end of said second waveform-transforming circuit;
(d) a server (4), an end of said server connecting with another end of said comparator;
(e) a pure fuel pool (6); and
(f) a controlling device (5), a control part of said controlling device connecting with another end of said server, two ways of said controlling device connecting with said pure fuel pool and said comparative fuel pool respectively,
**characterized in that**
the standard fuel pool (11) and the fuel-mix pool (12) are separated by a barrier (15) balancing temperature between said standard fuel pool and said fuel-mix pool.

2. The device according to claim 1, wherein said comparator (3) is a device selected from a group consisting of an OP (operational power) amplifier, a transistor and a FLIP-FLOP circuit.

3. The device according to claim 1 or 2, wherein said controlling device (5) is a device selected from a group consisting of valve and pump with a direction of ways selected from a group consisting of a uni-direction and a bi-direction.

4. The device according to one of claims 1 to 3, wherein a fuel in said pure fuel pool (6) is a methanol solution.

5. The device according to one of claims 1 to 4, wherein said comparator (3) and said server (4) are connected via an amplifier and an A/D (analog/digital) transformer and said A/D transformer is a single chip.

6. The device according to one of claims 1 to 5,
wherein a first transducer element (111) is located at a place where said first waveform-transforming circuit (211) is connected with said standard fuel pool (11);
wherein said first transducer element (111) is a piezoelectric element; and
wherein said piezoelectric element is a sensor.

7. The device according to one of claims 1 to 6,
wherein a second transducer element (121) is located at a place where said second waveform-transforming circuit (212) is connected with said fuel-mix pool (12);
wherein said second transducer element (121) is a piezoelectric element; and
wherein said piezoelectric element is a sensor.

8. The device according to one of claims 1 to 7,
wherein a third transducer element (13) is located between said standard fuel pool (11) and said fuel-mix pool (12) and is connected with said intermittent-pulse-wave generator (22);
wherein said third transducer element (13) is a piezoelectric element; and
wherein said piezoelectric element is a sensor.

9. A fuel-concentration detecting and controlling device for a fuel cell, comprising:
(a) a fuel-mix pool (12);
(b) an ultrasonic element (2) comprising a waveform-transforming circuit (21) and an intermittent-pulse-wave generator (22);
(c) a comparator (3), an end of said comparator connecting with an end of said waveform-transforming device;
(d) a server (4), an end of said server connecting with another end of said comparator;
(e) a pure fuel pool (6); and
(f) a controlling device (5), a control part of said controlling device connecting with another end of said server, two ways of said controlling device connecting with said pure fuel pool and said fuel-mix pool respectively,
**characterized by**
a thermostat (14) of thermo-compensation at said fuel-mix pool, and
an electronic circuit in said ultrasonic element (2) having a setup for a default fuel concentration (23), wherein the end of the comparator (3) connecting with an end of said waveform-transforming device also connects to the electronic circuit having the setup for a default fuel concentration (23).

10. The device according to claim 9, wherein a transducer element (121) is located at a place where said waveform-transforming circuit (21) is connected with said fuel-mix pool (6).

## Patentansprüche

1. Vorrichtung zur Bestimmung und Kontrolle der Brennstoffkonzentration in einer Brennstoffzelle, umfassend:
(a) ein Vergleichsbrennstoffreservoir (1), umfassend ein Standardbrennstoffreservoir (11) und ein Brennstoffgemischreservoir (12);
(b) ein Ultraschallelement (2), umfassend einen ersten Wellenform-Transformationsschaltkreis (211), einen zweiten Wellenform-Transformationsschaltkreis (212) und einen intermittierenden Pulswellengenerator (22), wobei ein Ende des ersten Wellenform-Transformationsschaltkreises und ein Ende des zweiten Wellenform-Transformationsschaltkreises jeweils mit einem Ende des Standardbrennstoffreservoirs und einem Ende des Brennstoffgemischreservoirs verbunden sind;
(c) einen Komparator (3), wobei ein Ende des Komparators mit einem anderen Ende des ersten Wellenform-Transformationsschaltkreises und einem anderen Ende des zweiten Wellenform-Transformationsschaltkreises verbunden ist;
(d) einen Server (4), wobei ein Ende des Servers mit einem anderen Ende des Komparators verbunden ist;
(e) ein reines Brennstoffreservoir (6); und
(f) eine Steuervorrichtung (5), wobei eine Steuereinheit der Steuervorrichtung mit einem anderen Ende des Servers verbunden ist, und zwei Wege der Steuervorrichtung mit dem reinen Brennstoffreservoir respektive dem Vergleichsbrennstoffreservoir verbunden sind,
**dadurch gekennzeichnet, dass**
das Standardbrennstoffreservoir (11) und das Brennstoffgemischreservoir (12) durch eine Trennwand (15) voneinander getrennt sind, welche die Temperatur zwischen dem Standardbrennstoffreservoir und dem Brennstoffgemischreservoir ausgleicht.

2. Vorrichtung nach Anspruch 1, wobei der Komparator (3) eine Vorrichtung ist, die aus einer Gruppe ausgewählt wird, die aus einem Betriebsleistungsverstärker, einem Transistor und einer Flipflop-Schaltung besteht.

3. Vorrichtung nach Anspruch 1 oder 2, wobei die Steuervorrichtung eine Vorrichtung ist, die aus einer Gruppe ausgewählt wird, die aus Ventil und Pumpe mit Wegen in einer Richtung besteht, die aus einer Gruppe ausgewählt wird, die die einseitige oder zweiseitige Richtwirkung umfasst.

4. Vorrichtung nach einem der Ansprüche 1 bis 3, wobei ein Brennstoff in dem reinen Brennstoffreservoir (6) eine Methanollösung ist.

5. Vorrichtung nach einem der Ansprüche 1 bis 4, wobei der Komparator (3) und der Server (4) durch einen Verstärker und einen A/D-Wandler (analog/digital) verbunden sind,
wobei der A/D-Wandler ein Einzelchip ist.

6. Vorrichtung nach einem der Ansprüche 1 bis 5,
wobei sich ein erstes Umformerelement (111) an einer Stelle befindet, an der der erste Wellenform-Transformationsschaltkreis (211) mit dem Standardbrennstoffreservoir (11) verbunden ist;
wobei das erste Umformelement (111) ein piezoelektrisches Element ist; und
wobei das piezoelektrische Element ein Sensor ist.

7. Vorrichtung nach einem der Ansprüche 1 bis 6,
wobei sich ein zweites Umformerelement (121) an einer Stelle befindet, an der der zweite Wellenform-Transformationsschaltkreis (212) mit dem Brennstoffgemischreservoir (12) verbunden ist;
wobei das zweite Umformelement (121) ein piezoelektrisches Element ist; und
wobei das piezoelektrische Element ein Sensor ist.

8. Vorrichtung nach einem der Ansprüche 1 bis 7,
wobei sich ein drittes Umformelement (13) zwischen dem Standardbrennstoffreservoir (11) und dem Brennstoffgemischreservoir (12) befindet und mit dem intermittierenden Pulswellengenerator (22) verbunden ist;
wobei das dritte Umformelement (13) ein piezoelektrisches Element ist; und
wobei das piezoelektrische Element ein Sensor ist.

9. Vorrichtung zur Bestimmung und Kontrolle der Brennstoffkonzentration in einer Brennstoffzelle, umfassend:
(a) ein Brennstoffgemischreservoir (12);
(b) ein Ultraschallelement (2), umfassend einen Wellenform-Transformationsschaltkreis (21) und einen intermitterenden Pulswellengenerator (22);
(c) einen Komparator (3), wobei ein Ende des Komparators mit einem Ende des Wellenform-Transformationsschaltkreises verbunden ist;
(d) einen Server (4), wobei ein Ende des Servers mit einem anderen Ende des Komparators verbunden ist;
(e) ein reines Brennstoffreservoir (6); und
(f) eine Steuervorrichtung (5), wobei eine Steuereinheit der Steuervorrichtung mit einem anderen Ende des Servers verbunden ist, und zwei Wege der Steuervorrichtung mit dem reinen Brennstoffreservoir und dem Brennstoffgemischreservoir verbunden sind,
**gekennzeichnet durch**.
einen Thermostat für die Thermokompensation an dem Brennstoffgemischreservoir, und einen elektronischen Schaltkreis in dem Ultraschallelement (2) mit einer Einstellung für eine Standardbrennstoffkonzentration (23), wobei Ende des Komparators (3), das mit einem Ende des Wellenform-Transformationsschaltkreises verbunden ist auch mit dem elektronischen Schaltkreis für die Einstellung einer Standardbrennstoffkonzentration (23) verbunden ist.

10. Vorrichtung nach Anspruch 9, wobei sich ein Umformelement (121) an einer Stelle befindet, an der der Wellenform-Transformationsschaltkreis (21) mit dem Brennstoffgemischreservoir (6) verbunden ist.

## Revendications

1. Dispositif pour la détection et le contrôle de la concentration de combustible pour une pile à combustible comprenant :
(a) un réservoir de combustible comparatif (1) comprenant un réservoir de combustible standard (11) et un réservoir de mélange de combustible (12) ;
(b) un élément ultra-sonique (2) comprenant un premier circuit de transformation de forme d'onde (21), un second circuit de transformation de forme d'onde (212) et un générateur d'ondes d'impulsions intermittentes (22), une extrémité du premier circuit de transformation de forme d'onde et une extrémité du second circuit de transformation de forme d'onde étant reliées respectivement à une extrémité du réservoir de combustible standard et à une extrémité du réservoir de mélange de combustible ;
(c) un comparateur (3) dont une extrémité est reliée à une autre extrémité du premier circuit de transformation de forme d'onde et à une autre extrémité du second circuit de transformation de forme d'onde ;
(d) un serveur (4), dont une extrémité est reliée à une autre extrémité du comparateur ;
(e) un réservoir de combustible pur (6) et
(f) un dispositif de contrôle (5) dont une partie de contrôle est reliée à une autre extrémité du serveur, deux voies du dispositif de contrôle étant reliées respectivement au réservoir de combustible pur et au réservoir de combustible comparatif
**caractérisé en ce**
**que** le réservoir de combustible standard (11) et le réservoir de mélange de combustible (12) sont séparés par une barrière (15) qui équilibre la température entre le réservoir de combustible standard et le réservoir de mélange de combustible.

2. Dispositif selon la revendication 1 dans lequel le comparateur (3) est un dispositif sélectionné dans un groupe consistant en un amplificateur de puissance opérationnelle, un transistor et un circuit bistable.

3. Dispositif selon la revendication 1 ou 2 dans lequel le dispositif de contrôle (5) est un dispositif sélectionné dans un groupe consistant en une vanne et une pompe avec une direction de voies sélectionnée dans un groupe comprenant une voie unidirectionnelle et une voie bidirectionnelle.

4. Dispositif selon l'une des revendications 1 à 3 dans lequel un combustible dans le réservoir de combustible pur (6) est une solution de méthanol.

5. Dispositif selon l'une des revendications 1 à 4 dans lequel le comparateur (3) et le serveur (4) sont reliés par un amplificateur et un transformateur analogique/numérique et le transformateur analogique/numérique est une seule puce.

6. Dispositif selon l'une des revendications 1 à 5 dans lequel un premier élément transducteur (111) est situé à un endroit où le premier circuit de transformation de forme d'onde (211) est relié au réservoir de combustible standard (11), dans lequel le premier élément transducteur (111) est un élément piézoélectrique et dans lequel l'élément piézoélectrique est un détecteur.

7. Dispositif selon l'une des revendications 1 à 6 dans lequel un second élément transducteur (121) est situé à un endroit où le second circuit de transformation de forme d'onde (212) est relié au réservoir de mélange de combustible (12), dans lequel le second élément transducteur (121) est un élément piézoélectrique et dans lequel l'élément piézoélectrique est un détecteur.

8. Dispositif selon l'une des revendications 1 à 7 dans lequel un troisième élément transducteur (13) est situé entre le réservoir de combustible standard (11) et le réservoir de mélange de combustible (12) et est relié au générateur d'ondes d'impulsions intermittentes (22), dans lequel le troisième élément transducteur (13) est un élément piézoélectrique et dans lequel l'élément piézoélectrique est un détecteur.

9. Dispositif pour la détection et le contrôle de la concentration de combustible pour une pile à combustible comprenant :
(a) un réservoir de mélange de combustible (12) ;
(b) un élément ultra-sonique (2) comprenant un circuit de transformation de forme d'ondes (21) et un générateur d'ondes d'impulsions intermittentes (22) ;
(c) un comparateur (3) dont une extrémité est reliée à une extrémité du dispositif de transformation de forme d'ondes ;
(d) un serveur (4) dont une extrémité est reliée à une autre extrémité du comparateur ;
(e) un réservoir de combustible pur (6) et
(f) un dispositif de contrôle (5) dont une partie de contrôle est reliée à une autre extrémité du serveur, deux voies du dispositif de contrôle étant reliées respectivement au réservoir de combustible pur et au réservoir de mélange de combustible,
**caractérisé par**
un thermostat (14) de compensation thermique au réservoir de mélange de combustible et un circuit électronique dans l'élément ultra-sonique (2) ayant un ajustage pour une concentration de combustible prédéfinie (23), dans lequel l'extrémité du comparateur (3) reliée à une extrémité du dispositif de transformation de forme d'onde est également reliée au circuit électronique ayant l'ajustage pour une concentration de combustible prédéfinie (23).

10. Dispositif selon la revendication 9 dans lequel un élément transducteur (121) est situé à un endroit où le circuit de transformation de forme d'onde (21) est relié au réservoir de mélange de combustible (6).
